Europäisches Patentamt

European Patent Office

Office européen des brevets

(11) Publication number: **0 119 324**
**B1**

# EUROPEAN PATENT SPECIFICATION

(45) Date of publication of patent specification: 02.12.87

(51) Int. Cl.⁴: **F 16 H 1/22, B 30 B 11/24**

(21) Application number: **83113137.0**

(22) Date of filing: **27.12.83**

(54) **High torque drive means for two very close shafts and application thereof to a double screw extruder.**

(30) Priority: **28.12.82 IT 2500682**

(43) Date of publication of application:
**26.09.84 Bulletin 84/39**

(45) Publication of the grant of the patent:
**02.12.87 Bulletin 87/49**

(84) Designated Contracting States:
**AT CH DE FR GB LI SE**

(56) References cited:
**DE-A-2 142 825**
**FR-A-2 437 532**
**US-A-3 824 875**
**US-A-3 894 725**

**MARINE GEARING J.F. SHANNON**

(73) Proprietor: **BAUSANO & FIGLI S.p.A.**
**C.so Indipendenza, 111**
**I-10086 Rivarolo Canavese (Torino) (IT)**

(72) Inventor: **De Bernardi, Stefano**
**Via Venezia 9**
**I-21052 Busto Arsizio (Varese) (IT)**

(74) Representative: **Dr. Ing. A. Racheli & C.**
**Viale San Michele del Carso, 4**
**I-20144 Milano (IT)**

Courier Press, Leamington Spa, England.

## Description

This invention relates to an apparatus rotationally driving two closely spaced shafts of a double screw extruder comprising a driven gear on each shaft, a synchronizing means for constraining each of said two closely spaced shafts to rotate at the same speed in one or the other direction, and a plurality of means for driving said shafts.

In the case of two adjacent shafts moving in opposite direction to each other, the simplest way for rotating them is to transmit the entire torque of the motor only to one of the two shafts, and then impart a rotation to the second shaft by a pair of identical gears, each one keyed to each shaft, such as to mesh with the other gear. On the other hand, if the parallel adjacent shafts must rotate in a same direction, the rotation imparted to the first shaft, by a single motor, is transmitted to the second shaft by means of an intermediate gear.

However, in these embodiments, the high speed of rotation of the shafts leads to a severe wear and a very short life of the plasticizing screws. On the other hand a low speed would cause high torques and accordingly occasional breakages. Moreover, being the shaft distance very small, the gears must have very small pitch diameters.

In the last few years, two ways have been followed to overcome this drawback.

The first way consists in making shafts which are no longer parallel to one another but carrying, for example, conical extruding screws, so that at some distance from the cone apex the gears may have larger dimensions. However, this complicates the whole construction.

A second approach was to separate the shaft actuation, by providing upstream of the shafts a reduction unit in which, the step before last is halved, so that each shaft directly receives from the reduction unit half of the total torque.

Attempts were also made to increase the gear sturdiness by lengthening the latter or increasing their number. However, this also considerably adds to costs.

US—A—3824875 discloses an apparatus of the type mentioned in the preamble to claim 1. It provides two motor units both of which operate only one of the two shafts that are placed very close. Furthermore the driving means is distant from the end of the corresponding shaft, so that a certain amount of torsion of the shafts will surely exist.

Marine Gearing J. F. Shannon shows in fig. 7.24 a Stal-Laval-gearing arrangement for propellers in which three motor means are foreseen. This document does not deal with the same field as the application; moreover it does not take into consideration the problem of cumbersome bearings of two very close shafts nor does it find a solution to it.

Therefore, it is the object of the present invention to provide a structurally economical solution to the problem of driving two close parallel adjacent shafts.

The above object has been achieved as specified in claim 1.

Other preferred embodiments are specified in claims 2-5.

The invention will now be explained by an exemplary embodiment as shown in the accompanying drawings, in which:

Fig. 1 is a schematic perpective view of a drive means according to the present invention, in which the two shafts rotate in opposite direction;

Fig. 2 is a schematic side view of the same drive means, in which also one of the two extruding screws is shown; and

Fig. 3 is a schematic perspective view of another embodiment, in which the two shafts are caused to rotate in a same direction.

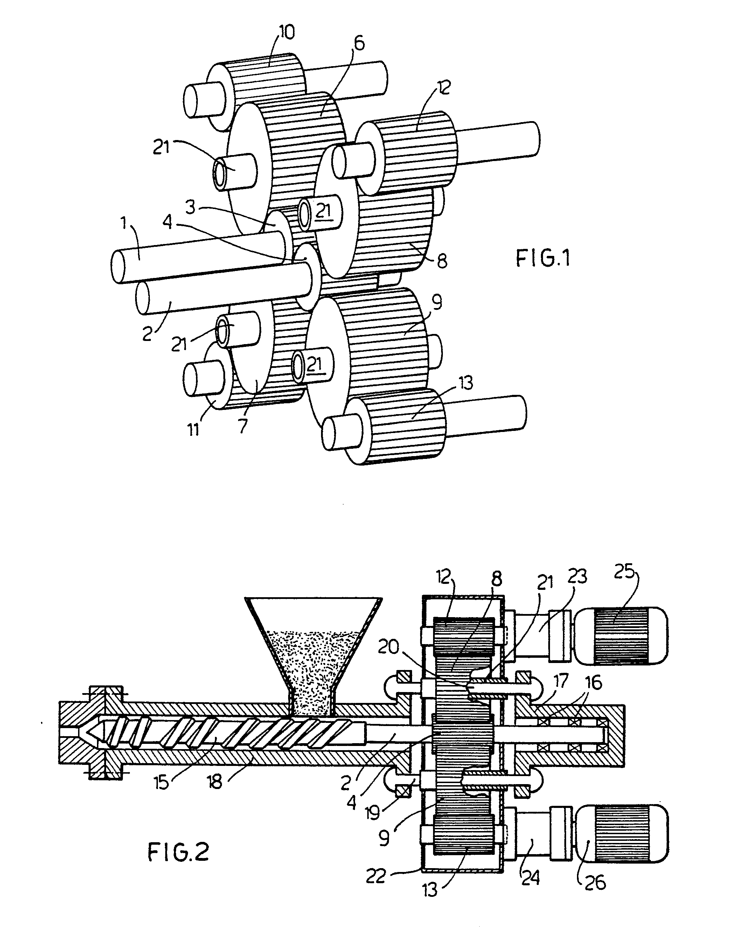

Referring first to Fig. 1, it will be seen that reference numerals 1 and 2 denote the two synchronized parallel counter-rotating shafts which are arranged at a very close distance from each other. Meshing gears 3 and 4, are mounted on each of the shafts. According to the present invention, rotation is imparted to each of such gears 3 and 4 at least by means of two drive members. Two torques act upon gear 3 by means of gears 6 and 7, which are located in suitable zones on the circumference of gear 3, to limit the resulting thrust on said gear 3. Gear 4 is driven by two further drive members terminating with gears 8 and 9, respectively. In the particular embodiment of Fig. 1, the drive members are gears driven by other gears 10, 11, 12 and 13, respectively, which in turn are driven by independent motors.

This solution allows a reduced dimensioning of the length of gears 3 and 4 since the latter, serving only for synchronization of the two shafts, do not transmit the full power. Moreover, a good power division is obtained for the power supplied to each of the gears, as each torque is applied to the respective gear 3 or 4 at spaced apart peripheral zones such as to minimize stresses.

Referring now to Fig. 2, in which an extruder has been schematically shown, it will be seen that the screws 15 have been formed on the shafts 1 and 2, although only one screw is shown in Fig. 2. The four gears 10, 11, 12 and 13 (of which only two are shown in Fig. 2) are connected to epicyclical reduction units 23 and 24, which are driven by motors 25 and 26, respectively.

The shafts 1 and 2 must be supported by a series of axial thrust bearings 16, the strain of which has to be supported by the support 17. The axial strain caused by the extrusion pressure of the plastic material has to be supported by the housing 18 containing the extruder screws 15. According to the invention, it is provided that said housing 18 and support 17 are directly connected to each other, for example by tie rods 19 and 20 which conveniently are caused to pass through hollow shafts 21 carrying the gears 6, 7, 8 and 9. Thus, the drive box 22, containing the gears 3 to 13, is released of any stress due to these considerable strains.

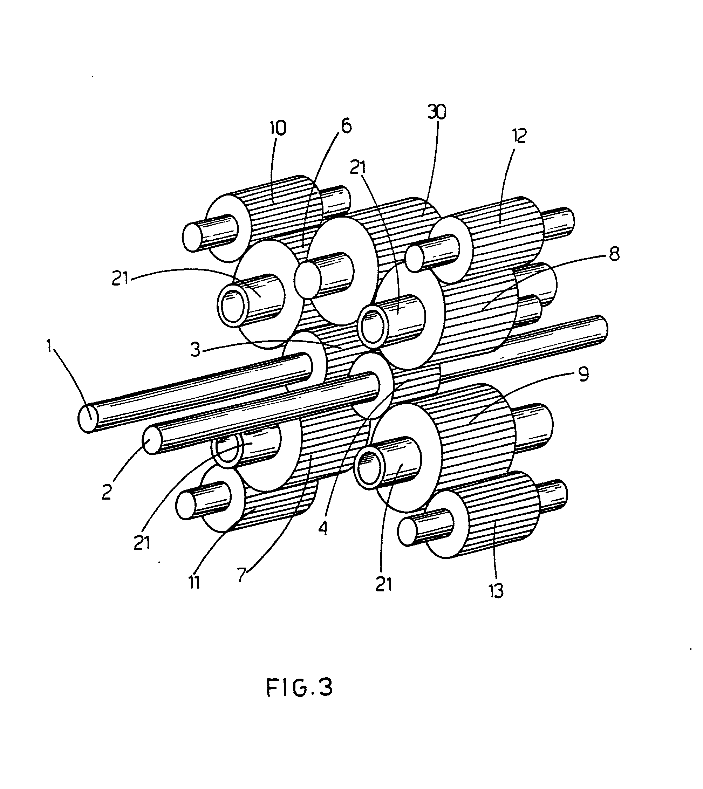

Referring now to Fig. 3, it will be seen that also therein the same reference numerals 1 and 2 are used to indicate two synchronized parallel shafts which rotate in a same direction and are arranged at a very close distance. Each of the shafts has gears 3 and 4 mounted thereon, but not meshing with each other. As for the embodiment of Fig. 1, it is provided that motion is given to each of said gears 3 and 4 at least by means of two drive members. Two torques are caused to act upon gear 3 by means of gear 6 and 7, which will be arranged in suitable zones on the circumference of gear 3 to limit the resulting thrust on said gear 3. Gear 4 is driven by two further drive members terminating with gears 8 and 9, respectively. Also in this case, the drive members are gears driven by further gears 10, 11, 12 and 13, respectively, which in turn are driven by independent motors.

In this case, synchronism between said shafts 1 and 2 is provided by gear 30 meshing with gears 6 and 8 forming part of the drive members operating the two gears 3 and 4, respectively. Also in this case, the dimensioning of gears 3 and 4 is much reduced, since such gears serve only to transmit the power share assigned thereto.

## Claims

1. An apparatus rotationally driving two closely spaced shafts (1, 2) of a double screw (15) extruder comprising:
— a driven gear (3, 4) on each shaft (1, 2);
— a synchronizing means (3, 4, 30) for constraining each of said two closely spaced shafts (1, 2) to rotate at the same speed in one or the other direction;
— and a plurality of drive means for driving said shafts (1, 2)
characterized in that
a) the drive means are at least four independent drive units (25, 26);
b) each driven gear (3, 4) is driven by at least two of the drive units;
c) each driven gear (3, 4) meshes with the respective driving gears (6-9) independently driven by each respective drive unit.

2. An apparatus as claimed in claim 1, characterized in that the drive units comprise epicyclical reduction units (23, 24).

3. An apparatus as claimed in claim 1, characterized in that the synchronizing means are the same driven gears (3, 4) meshing with each other.

4. An apparatus as claimed in claim 1, characterized in that the driving gear (6) of one drive unit operating the driven gear (3) meshes with an idler gear (30) which also meshes with the driving gear (8) of a drive unit operating the other driven gear (4).

5. An apparatus as claimed in claim 1, characterized in that the housing (18) of the double screw extruder is connected to support (17) of a thrust bearing (16) by means of tie rods (19, 20) passing through the four shafts (21) of the driving gears (6-9).

## Patentansprüche

1. Vorrichtung für die Drehbewegung von zwei eng genachbarten Wellen (1, 2) einer Doppelschneckenpresse (15) mit
— einem angetriebenen Zahnrad (3, 4) auf jeder Welle (1, 2)
— einem Synchronisiermittel (3, 4, 30), um die beiden eng benachbarten Wellen (1, 2) zwangsläufig mit derselben Geschwindigkeit in der einen oder anderen Richtung drehen zu lassen,
— einer Vielzahl von Betätigungsmitteln zum Drehen der Wellen (1, 2),
dadurch gekennzeichnet, daß
a) die Betätigungsmittel mindestens vier unabhängige Antriebselemente (25, 26) sind,
b) jedes angetriebene Zahnrad (3, 4) von wenigstens zwei Antriebselementen betätigt wird.
c) jedes angetriebene Zahnrad (3, 4) in die entsprechenden Antriebsräder (6 bis 9), die unabhängig von jedem entsprechenden Antriebselement betätigt werden, eingreift.

2. Vorrichtung nach Anspruch 1, dadurch gekennzeichnet, daß die Antriebselemente epizyklische Reduktionsgruppen (23, 24) umfassen.

3. Vorrichtung nach Anspruch 1, dadurch gekennzeichnet, daß die Synchronisiermittel dieselben Zahnräder (3, 4), die ineinander eingreifen.

4. Vorrichtung nach Anspruch 1, dadurch gekennzeichnet, daß das Antriebsrad (6) eines Antriebselements, das das angetriebene Zahnrad (3) betätigt, in ein Leerlaufzahnrad (30) eingreift, das seinerseits in das Antriebsrad (8) eines Antriebselements, das das andere angetriebene Zahnrad (4) betätigt, eingreift.

5. Vorrichtung nach Anspruch 1, dadurch gekennzeichnet, das das Gehäuse (18) der Doppelschneckenpresse mit einem Support (1) eines Drucklagers (16) durch Zugstangen (19, 20), die durch die vier Wellen (21) der Antriebsräder (6 bis 9) gehen, verbunden ist.

## Revendications

1. Mécanisme pour l'actionnement rotatoire de deux arbres (1, 2) trés proches d'une extrudeuse à double vis, comprenant:
— un engrenage mû sur chaque arbre (1, 2);
— un moyen synchroniseur (3, 4, 30) pour obliger chacun des deux arbres (1, 2) très proches à tourner à la même vitesse dans une direction ou dans l'autre direction;
— une pluralité de moyens d'entraînement pour entraîner les arbres susdits (1, 2),
caractérisé en ce que:
a) les moyens d'actionnement sont au moins quatre éléments moteurs indépendants (25, 26);
b) chaque engrenage mû (3, 4) est actionné au moins par deux éléments moteurs;
c) chaque engrenage mû (3, 4) engrène avec les respectifs engrenages moteurs (6-9) actionés independamment par chaque respectif élément moteur.

2. Mécanisme suivant la revendication 1, caractérisé en ce que les moteurs comprennent des groupes de réduction épicicloïdals (23, 24).

3. Mécanisme suivant la revendication 1, caractérisé en ce que les moyens synchroniseurs sont les mêmes engrenages mûs (3, 4) qui engrènent l'un avec l'autre.

4. Mécanisme suivant la revendication 1, caractérisé en ce que l'engrenage moteur (6) d'un élément moteur qui actionne l'engrenage mû (3) engrène avec un engrenage fou (30) qui engrène aussi avec l'engrenage moteur (8) d'un élément moteur qui actionne l'autre engrenage mû (4).

5. Mécanisme suivant la revendication 1, caractérisé en ce que la carcasse (18) de l'extrudeuse à double vis est connectée à un support (17) d'un coussinet de butée (16) au moyen de tirants (19, 20) qui passent à travers les quatre arbres (21) des engrenages moteurs (6-9).

FIG.1

FIG.2

FIG. 3